(19) Europäisches Patentamt
European Patent Office
Office européen des brevets

(11) **EP 2 675 941 B1**

(12) **FASCICULE DE BREVET EUROPEEN**

(45) Date de publication et mention
de la délivrance du brevet:
**13.09.2017 Bulletin 2017/37**

(51) Int Cl.:
***C25B 15/00*** *(2006.01)*     ***C25B 11/12*** *(2006.01)*
***G01N 27/38*** *(2006.01)*

(21) Numéro de dépôt: **12703848.7**

(22) Date de dépôt: **16.02.2012**

(86) Numéro de dépôt international:
**PCT/EP2012/052689**

(87) Numéro de publication internationale:
**WO 2012/110600 (23.08.2012 Gazette 2012/34)**

(54) **PROCEDE D'ACTIVATION D'UNE ELECTRODE EN DIAMANT DOPE**

VERFAHREN ZUR AKTIVIERUNG EINER DOTIERTEN DIAMANTELEKTRODE

METHOD FOR ACTIVATING A DOPED DIAMOND ELECTRODE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.02.2011 FR 1151341**

(43) Date de publication de la demande:
**25.12.2013 Bulletin 2013/52**

(73) Titulaire: **Commissariat à l'Énergie Atomique
et aux Énergies Alternatives
75015 Paris (FR)**

(72) Inventeurs:
• **DE SANOIT, Jacques**
**F-94150 Rungis (FR)**
• **KIRAN, Raphaël**
**F-92190 Meudon (FR)**
• **SCORSONE, Emmanuel**
**F-78114 Magny-les-Hameaux (FR)**

(74) Mandataire: **Ahner, Philippe et al
BREVALEX
95, rue d'Amsterdam
75378 Paris Cedex 8 (FR)**

(56) Documents cités:
**WO-A1-2008/148861**

• **MAHE E ET AL: "Electrochemical reactivity at
graphitic micro-domains on polycrystalline
boron doped diamond thin-films electrodes",
ELECTROCHIMICA ACTA, ELSEVIER SCIENCE
PUBLISHERS, BARKING, GB, vol. 50, no. 11, 1
avril 2005 (2005-04-01) , pages 2263-2277,
XP004779490, ISSN: 0013-4686, DOI:
10.1016/J.ELECTACTA.2004.10.060**
• **J. INIESTA ET AL: "Electrochemical oxidation of
3-methylpyridine at a boron-doped diamond
electrode: application to electroorganic
synthesis and wastewater treatment",
ELECTROCHEMISTRY COMMUNICATIONS, vol.
3, no. 7, 1 juillet 2001 (2001-07-01) , pages 346-351,
XP55048611, ISSN: 1388-2481, DOI:
10.1016/S1388-2481(01)00174-6**
• **JOSEPH. WANG ET AL: "In situ electrochemical
renewal of glassy carbon electrodes",
ANALYTICAL CHEMISTRY, vol. 60, no. 5, 1 mars
1988 (1988-03-01), pages 499-502, XP55048560,
ISSN: 0003-2700, DOI: 10.1021/ac00156a026**
• **DE SANOIT J ET AL: "Electrochemical diamond
sensors for TNT detection in water",
ELECTROCHIMICA ACTA, ELSEVIER SCIENCE
PUBLISHERS, BARKING, GB, vol. 54, no. 24, 1
octobre 2009 (2009-10-01), pages 5688-5693,
XP026236160, ISSN: 0013-4686, DOI:
10.1016/J.ELECTACTA.2009.05.013 [extrait le
2009-05-13] cité dans la demande**

**(Cont. page suivante)**

- BECKER D ET AL: "The impedance of fast charge transfer reactions on boron doped diamond electrodes", ELECTROCHIMICA ACTA, ELSEVIER SCIENCE PUBLISHERS, BARKING, GB, vol. 49, no. 1, 30 décembre 2003 (2003-12-30), pages 29-39, XP004474618, ISSN: 0013-4686, DOI: 10.1016/J.ELECTACTA.2003.04.003
- PANIZZA ET AL: "Application of diamond electrodes to electrochemical processes", ELECTROCHIMICA ACTA, ELSEVIER SCIENCE PUBLISHERS, BARKING, GB, vol. 51, no. 2, 10 octobre 2005 (2005-10-10), pages 191-199, XP005099489, ISSN: 0013-4686, DOI: 10.1016/J.ELECTACTA.2005.04.023
- RAO TATA N ET AL: "Electrochemical detection of carbamate pesticides at conductive diamond electrodes", ANALYTICAL CHEMISTRY, AMERICAN CHEMICAL SOCIETY, US, vol. 74, no. 7, 1 avril 2002 (2002-04-01), pages 1578-1583, XP002552430, ISSN: 0003-2700, DOI: 10.1021/AC010935D [extrait le 2002-02-23]
- DESLOUIS C ET AL: "Electrochemical behaviour of (111) B-Doped Polycrystalline Diamond: Morphology/surface conductivity/activity assessed by EIS and CS-AFM", DIAMOND AND RELATED MATERIALS, ELSEVIER SCIENCE PUBLISHERS, AMSTERDAM, NL, vol. 20, no. 1, 1 janvier 2011 (2011-01-01), pages 1-10, XP027566765, ISSN: 0925-9635 [extrait le 2010-11-03]
- SWAIN ET AL: "Solid Electrode Materials Pretreatment and Activation", 1 janvier 2007 (2007-01-01), HANDBOOK OF ELECTROCHEMISTRY, ELSEVIER, NL, PAGE(S) 111 - 153, XP009151928, ISBN: 978-0-444-51958-0 5.2.6.5 Electrochemical polarization; page 140

**Description**

**DOMAINE TECHNIQUE**

La présente invention appartient au domaine des électrodes à base de diamant dopé, leur préparation et leur activation.

Plus particulièrement, la présente invention concerne un procédé de traitement d'une électrode à base de diamant dopé capable de produire, par activation électrochimique, une électrode présentant une réactivité électrochimique importante et stable en fonction du temps et de son utilisation, c'est-à-dire ayant, de préférence, une constante de vitesse de transfert électronique ($k_0$) supérieure ou égale à $10^{-3}$ cm/s.

**ÉTAT DE LA TECHNIQUE ANTÉRIEURE**

Les électrodes à base de diamant dopé - en particulier les électrodes à base de diamant dopé au bore - ont pour principaux avantages une large fenêtre de potentiel, une stabilité en milieu aqueux et organique, de faibles courants résiduels et une résistance élevée à la corrosion chimique et électrochimique.

De ce fait, ces électrodes sont particulièrement adaptées à des fins de détection ou d'analyse, mais aussi, lorsque les électrodes sont particulièrement conductrices et possèdent une réactivité électrochimique importante, à des applications telles que la synthèse électrochimique, le traitement par électrolyse des eaux usées ou comme capteurs bioélectroniques.

En outre, comme le diamant est un matériau qui est biologiquement inerte, les électrodes en diamant peuvent être implantées dans le corps humain.

La réactivité électrochimique d'une électrode peut être reliée à sa constante de vitesse de transfert électronique ($k_0$). En fait, plus la valeur de cette constante ($k_0$) est élevée et plus la réactivité de l'électrode est grande. A ce propos, on considère qu'une électrode a une réactivité électrochimique satisfaisante lorsqu'elle a une constante de vitesse de transfert électronique ($k_0$) supérieure ou égale à $10^{-3}$ cm/s.

Typiquement, cette constante de vitesse de transfert électronique ($k_0$) est mesurée par spectroscopie d'impédance électrochimique (EIS) au potentiel de circuit ouvert (OCP) en présence d'un couple redox rapide.

La résistance de transfert électronique ($R_T$) d'une électrode est, quant à elle, mesurée en plaçant l'électrode en question dans une solution aqueuse électriquement conductrice (électrolyte) comprenant notamment une concentration connue d'un couple redox rapide, comme par exemple un mélange équimolaire de ferrocyanure de potassium et de ferricyanure de potassium.

La constante de vitesse de transfert électronique ($k_0$) peut alors être définie selon l'équation (1) ci-dessous :

$$k_0 = \left( \frac{R \times T}{N \times F} \right) \times \frac{1}{S \times F \times R_T \times C_0} \qquad (1)$$

R étant la constante universelle des gaz parfaits,
T étant la température absolue de l'électrolyte (en Kelvin),
S étant la surface de l'électrode (en cm$^2$),
F étant la constante de Faraday (96 485 C.mol$^{-1}$),
$R_T$ étant la résistance de transfert de l'électrode (en Ohm),
$C_0$ étant la concentration du couple redox (en mol.cm$^{-3}$) et
N étant le nombre de moles d'électrons échangés par mole de l'un ou l'autre des éléments constituant le couple redox rapide utilisé.

Des études ont permis de démontrer que le taux de dopage, ainsi que la nature des terminaisons de la surface d'une électrode en diamant dopé influent sur la réactivité électrochimique de cette électrode.

C'est ainsi qu'il apparait que les surfaces oxydées du diamant (terminaisons O) sont stables et hydrophiles, mais possèdent une réactivité moindre, alors que, à l'inverse, les surfaces hydrogénés du diamant (terminaisons H) présentent un caractère hydrophobe, associé à une réactivité élevée (voir le document **[1]** référencé à la fin de la description).

En outre, il semblerait que le dopage du diamant, en l'occurrence un dopage au bore, ait un effet stabilisant sur les terminaisons H du diamant (document **[2]**).

Il apparait donc qu'il faille, pour avoir une électrode en diamant ayant une réactivité électrochimique importante (c'est-à-dire avec une constante ($k_0$) supérieure ou égale à $10^{-3}$ cm/s), que cette électrode présente une surface hydrogénée et qu'elle soit, de préférence, en diamant dopé.

Malheureusement, une exposition à l'air pendant plusieurs jours ou une simple utilisation comme électrode de travail induit une chute importante de cette réactivité, du fait de l'oxydation des terminaisons H et/ou de l'encrassement éventuel de cette électrode par des substances contaminantes.

Le diamant dopé nécessite donc de subir un traitement de surface afin que sa réactivité électrochimique soit augmentée (dans le cas d'une surface initialement partiellement ou totalement oxydée) ou rétablie (dans le cas d'une surface initialement hydrogénée, qui aurait été progressivement oxydée) ; on parle alors d'activation ou de réactivation de la surface de l'électrode.

Différents procédés d'activation et de réactivation d'une électrode en diamant dopé visant à optimiser ou à rétablir les propriétés électrochimiques du diamant dopé ont déjà été proposés dans l'art antérieur.

Par exemple, **G. Salazar-Banda et al.** (document **[2]**) effectuent un prétraitement anodique de l'électrode en diamant dopé à une tension de +3 V/ESH (pour « Electrode Standard à Hydrogène ») pendant 30 minutes ou encore un prétraitement cathodique à une tension de -3 V/ESH pendant 3 minutes et 30 minutes dans une solution aqueuse de $H_2SO_4$ de concentration 0,5 mol.L$^{-1}$, afin de rétablir la réactivité de l'électrode en diamant dopé.

**A. Kraft** (document **[3]**) effectue une oxydation électrochimique, afin de convertir les terminaisons H en terminaisons O ; la surface oxydée pourra par la suite être de nouveau rendue hydrogénée en réalisant un traitement cathodique dans un électrolyte aqueux acide.

Ces différents traitements présentent l'inconvénient de nécessiter des durées de traitement d'activation très longues (au minimum 30 minutes).

**J. de Sanoit et E. Vanhove** (document **[4]**), quant à eux, préconisent l'application d'un potentiel alternativement de polarisation cathodique et anodique, d'amplitude croissance jusqu'à obtenir une densité de courant anodique et cathodique comprise entre 10 µA/cm$^2$ et 1 mA/cm$^2$. Bien que cette manière de procéder permette d'obtenir des électrodes à base de diamant dopé présentant des propriétés améliorées en termes de cinétique de transfert de charge ($k_0$ supérieure ou égale à 10$^{-3}$ cm/s), de stabilité et de reproductibilité des propriétés électrochimiques, elle présente cependant le principal inconvénient d'être très consommatrice en temps. En effet, une opération d'activation électrochimique dure ici entre 10 minutes (en mode galvanodynamique) et 30 minutes (en mode

E. Mahé et al (document [6]) proposent un procédé de réactivation d'une électrode en diamant dopé au bore soit en appliquant un courant anodique de -10 mA/cm$^2$ pendant 20 minutes, suivi d'un courant cathodique de + 10 mA/cm$^2$ pendant 20 minutes, soit en appliquant un train de dix impulsions, la durée de chaque impulsion étant tour à tour égale à 60s, 50s, 40s, 30s et 20s. Les inventeurs ont donc cherché à élaborer un procédé d'activation électrochimique d'une électrode en diamant dopé, qui permette d'obtenir une électrode ayant une cinétique de transfert de charge satisfaisante ($k_0$ supérieure ou égale à 10$^{-3}$ cm/s), ainsi que des propriétés électrochimiques stables et reproductibles, en un temps d'activation électrochimique beaucoup plus court que ce qu'il est actuellement possible d'obtenir avec les procédés d'activation connus de l'art antérieur.

On précise que la valeur de 10$^{-3}$ cm/s s'entend d'une valeur mesurée par spectroscopie d'impédance électrochimique au potentiel de circuit ouvert (OCP) en présence d'un couple Redox rapide.

## EXPOSÉ DE L'INVENTION

Ce but est atteint grâce à un procédé d'activation électrochimique d'une électrode à base de diamant dopé, ledit procédé comprenant la mise en contact de l'électrode avec une solution aqueuse contenant un électrolyte contenant ou non des espèces électro-actives et l'application, à ladite électrode, d'une excitation électrique sous la forme d'une ou plusieurs impulsions électriques, dans lequel chaque impulsion contribue à l'activation de l'électrode pendant un temps $t_a$ à condition que :

1°) l'amplitude de cette impulsion pendant ce temps $t_a$ soit, en valeur absolue, supérieure à une amplitude seuil ayant l'une des valeurs ci-après :

- lorsque l'électrolyte ne contient pas d'espèces électro-actives :

  1 µA.cm$^{-2}$ si l'impulsion est une impulsion de courant cathodique ;
  3 mA.cm$^{-2}$ si l'impulsion est une impulsion de courant anodique ;
  200 mV si l'impulsion est une impulsion de tension cathodique ; et
  2 V si l'impulsion est une impulsion de tension anodique ;

- lorsque l'électrolyte contient des espèces électro-actives :

  400 µA.cm$^{-2}$ si l'impulsion est une impulsion de courant cathodique ;
  2 V si l'impulsion est une impulsion de tension cathodique ; et

2°) le temps $t_a$ d'activation, exprimé en secondes, est, pour chaque impulsion, inférieur ou égal à 10 et respecte, pour chaque impulsion, l'une des formules ci-après :

$$t_a \geq \frac{1}{n_c \times \left|J_{cMax}\right| \times K_1} \quad \text{pour une impulsion de courant cathodique ;}$$

$$t_a \geq \frac{1}{n_a \times \left|J_{aMax}\right| \times K_2} \quad \text{pour une impulsion de courant anodique ;}$$

$$t_a \geq \frac{1}{n_c \times \left|V_{cMax}\right| \times K_3} \quad \text{pour une impulsion de tension cathodique ;}$$

$$t_a \geq \frac{1}{n_a \times \left|V_{aMax}\right| \times K_3} \quad \text{pour une impulsion de tension anodique ;}$$

dans lesquelles :

$n_c$ est le nombre total d'impulsions cathodiques formant l'excitation électrique ;
$n_a$ est le nombre total d'impulsions anodiques formant l'excitation électrique ;
$\left|J_{cMax}\right|$ est la valeur maximale, exprimée en valeur absolue et en Ampères par cm$^2$, du courant cathodique parmi les $n_c$ impulsions ;
$\left|J_{aMax}\right|$ est la valeur maximale, exprimée en valeur absolue et en Ampères par cm$^2$, du courant anodique parmi les $n_a$ impulsions ;
$\left|V_{cMax}\right|$ est la valeur maximale, exprimée en valeur absolue et en Volts, de la tension cathodique parmi les $n_c$ impulsions ;
$[V_{aMax}|$ est la valeur maximale, exprimée en valeur absolue et en Volts, de la tension anodique parmi les $n_a$ impulsions ;

$$K_1 = 10^4 \ A^{-1}.cm^2.s^{-1} \ ;$$

$$K_2 = 10^2 \ A^{-1}.cm^2.s^{-1} \ ;$$

$$K_3 = 0,1 \ V^{-1}.s^{-1} \ ;$$

et dans lequel l'excitation électrique est appliquée durant un temps total $t_{tot}$ répondant à la formule ci-après :

$$t_{tot} = \sum_{j=1 \ \text{à} \ n} (t_{aj} + t_{ij})$$

où n est le nombre total d'impulsions formant l'excitation électrique avec $n=n_c+n_a$ et $t_{aj}$ est le temps d'activation $t_a$ pendant lequel la j$^{\text{ième}}$ impulsion est active, $t_{ij}$ est le temps $t_i$ pendant lequel la j$^{\text{ième}}$ impulsion est inactive et le rapport $t_{aj}/t_{ij}$ est supérieur à $10^{-4}$.

Il est à noter qu'en théorie, il suffit qu'une impulsion ait une amplitude, en valeur absolue, supérieure à zéro pour qu'elle contribue à l'activation de l'électrode. En pratique, la valeur absolue de l'amplitude de l'impulsion doit être supérieure à une valeur seuil d'activation qui dépend de l'électrolyte utilisé. Ainsi, si on considère que $t_d$ est la durée d'une impulsion (durée entre le départ et le retour de l'impulsion à la ligne de base), $t_a$ est la durée active correspondant à la somme des durées (à l'intérieur de la durée $t_d$) pour lesquelles la valeur absolue de l'amplitude de l'impulsion est supérieure à la valeur seuil et $t_i$ est la somme des durées (à l'intérieur de la durée $t_d$) pour lesquelles la valeur absolue de l'amplitude de l'impulsion est inférieure à la valeur seuil, alors $t_d = t_a + t_i$ et le rapport $t_a / t_i$, pour chaque impulsion, doit être supérieur à 0,0001. La valeur absolue de la valeur seuil d'activation est égale à :

- 1 $\mu$A/cm$^2$ pour une impulsion de courant cathodique ($J_c$) dans un électrolyte ionique aqueux ne contenant aucune espèce électro-active ;

- 400 µA/cm$^2$ pour une impulsion de courant cathodique ($J_c$) dans un électrolyte ionique aqueux comprenant au moins une espèce électro-active ;
- 3 mA/cm$^2$ pour une impulsion de courant anodique ($J_a$) dans un électrolyte ionique aqueux ne contenant aucune espèce électro-active ;
- 2 V pour une impulsion de tension anodique ($V_a$) dans un électrolyte ionique aqueux ne contenant aucune espèce électro-active ;
- 200 mV pour une impulsion de tension cathodique ($V_c$) dans un électrolyte ionique aqueux ne contenant aucune espèce électro-active ;
- 2 V pour une impulsion de tension cathodique ($V_c$) dans un électrolyte ionique aqueux contenant des espèces électro-actives.

Il est à noter qu'il n'est pas possible d'activer une électrode dans un électrolyte comprenant des espèces électro-actives en utilisant des impulsions de courant ou de tension anodique.

Dans ce qui précède et ce qui suit, le terme « espèce électro-active » désigne une espèce qui subit un changement d'état d'oxydation lors d'une étape de transfert de charges.

Contrairement à ce qui est habituellement pratiqué dans les procédés d'activation de l'art antérieur, on n'applique pas un balayage en courant ou en potentiel à une vitesse de balayage donnée ; on n'applique pas non plus un potentiel donné maintenu pendant une durée déterminée. Dans le procédé selon l'invention, on applique des impulsions de courant ou de potentiel.

Typiquement, une impulsion est une variation de courte durée d'une grandeur physique (tension, courant...) avec retour à l'état initial. Dans le cadre de l'invention, on entend par « impulsion » une variation brève de tension ou de courant, pendant une durée totale inférieure ou égale à 10 s, suivie d'un retour à l'état initial (généralement à une amplitude égale à zéro) de la valeur de la tension ou du courant.

De même, dans le cadre de l'invention, on entend par « amplitude » la valeur maximale de la tension (ou du courant) anodique ou cathodique atteinte pendant une impulsion de tension (ou de courant) anodique ou cathodique par rapport à une ligne de base, généralement égale à zéro.

Par voie de conséquence, une impulsion positive peut être considérée comme étant une onde dont l'amplitude augmente par rapport à la ligne de base et, après une durée $t_d$, revient à la ligne de base. Une impulsion négative peut, quant à elle, être considérée comme étant une onde dont l'amplitude diminue par rapport à la ligne de base et revient à la ligne de base après une durée $t_d$.

Dans le cadre de l'invention, il est préférable d'avoir une ou plusieurs impulsions ayant des amplitudes de courant ou de tension maximale et un temps le plus court possible, afin de réaliser l'activation de l'électrode le plus rapidement possible. Aussi, la ou les impulsion(s) électrique(s) ont, de préférence, une amplitude maximale en un temps d'activation $t_a$ minimal.

En fait, la durée d'une impulsion est liée à son amplitude, au type d'électrolyte utilisé et aussi au nombre total d'impulsions. Ainsi, des résultats encore meilleurs peuvent être obtenus en augmentant l'amplitude d'une impulsion et en diminuant la durée de son temps d'activation ou en augmentant le nombre d'impulsions.

De même, l'amplitude, la durée et le nombre d'impulsions pour obtenir l'activation optimale d'une électrode peuvent varier d'une expérience à une autre selon l'électrolyte utilisé. Ainsi, les valeurs optimales de ces paramètres pour réaliser l'activation d'une électrode en diamant dopé dans de l'urine ne seront pas forcément les mêmes que celles qui seront optimales pour réaliser l'activation dans du LiClO$_4$. Cependant, on obtiendra toujours un bon résultat en utilisant une ou plusieurs impulsions de durée inférieure ou égale à 10 s.

Avantageusement, la durée et l'amplitude de chaque impulsion électrique, ainsi que le nombre d'impulsions sont choisis de manière à ce que la durée totale de l'excitation électrique soit inférieure ou égale à une minute. De préférence, la durée totale de l'excitation électrique $t_{tot}$ est inférieure ou égale à 30 secondes, de préférence inférieure ou égale 20 secondes, préférentiellement inférieure ou égale à 10 secondes.

Dans le cadre de l'invention, il est possible d'obtenir une activation de l'électrode en utilisant des impulsions ayant un temps d'activation $t_a$ inférieur ou égal à 10 s, inférieur ou égal à 1 seconde, inférieur ou égal à 100 millisecondes ou encore, inférieur ou égal à 10 millisecondes.

Dans le cadre de l'invention, chaque impulsion électrique peut avoir toute forme possible (carrée, triangulaire, sinusoïdale, en dents de scie, en escalier... ou un mélange de ces formes).

De préférence, chaque impulsion a idéalement une forme en créneaux, c'est-à-dire des parois à 90° et des crêtes à 180°.

Lorsqu'il y a plusieurs impulsions, les impulsions peuvent être ou non périodiques ; on peut avoir un mélange d'impulsions périodiques et d'impulsions non périodiques. Les impulsions peuvent avoir la même forme ou être de formes différentes. Les impulsions peuvent éventuellement avoir un même temps d'activation. Au final, les impulsions peuvent ne pas à être identiques, c'est-à-dire avoir des durées, des amplitudes et/ou des formes différentes.

Il est bien entendu que les conditions sur le temps d'activation $t_a$ et sur la valeur seuil de l'amplitude dépendent à la fois du fait que l'électrolyte contienne ou non des espèces électro-actives et du fait que les impulsions soient anodiques ou cathodiques. A ce propos, lorsque l'excitation électrique est formée d'un mélange d'impulsion(s) cathodique(s) et d'impulsion(s) anodique(s), les deux cas doivent être considérés séparément pour déterminer respectivement le temps d'activation $t_a$ seuil pour les impulsions anodiques et le temps d'activation $t_a$ seuil pour les impulsions cathodiques.

De préférence, le rapport $t_a/t_i$ est choisi de manière à ce qu'il soit supérieur ou égal à 1 pour chacune des impulsions.

De préférence, les impulsions sont comprises entre 10 et 50 impulsions.

De préférence, les impulsions sont périodiques.

De préférence, les impulsions de courant cathodique ont une amplitude maximale comprise entre 400 $\mu$A/cm$^2$ et 5 mA/cm$^2$.

De préférence, les impulsions de tension cathodique ont une amplitude maximale comprise entre 2 V et 5 V.

Des exemples d'électrolytes contenant une ou plusieurs espèces électro-actives peuvent être choisis parmi un sel ionique électroactif (comme par exemple LiCl, NaCl, KCl), de l'urine, du sang, du vin, une boisson aromatisée au cola, de l'eau de mer.

En d'autres termes, l'électrolyte peut contenir au moins une espèce électro-active choisie de manière non limitative parmi les acides comme $HNO_3$ et HCl ou leur mélange, des sels comme LiCl, KCl et NaCl ou leur mélange, et un tampon phosphate salin. L'électrolyte contenant au moins une espèce électro-active peut aussi être un milieu plus complexe comme le vin, une boisson aromatisée au cola, les fluides biologiques contenant des protéines, des enzymes, des composées organiques divers, de l'urine ou encore du sang.

D'une manière générale, les espèces électro-actives comprennent tous les acides, bases et sels organiques ou minéraux dont les constituants changent d'état d'oxydation dans le domaine de potentiel utilisé.

De préférence, l'électrolyte utilisé pour réaliser l'activation électrochimique ne contient pas d'espèces électro-actives.

Des exemples non limitatifs d'électrolytes ne contenant pas d'espèces électro-actives (que nous appellerons également ci-dessous électrolyte non électroactif) peuvent être choisis parmi du $LiClO_4$, du $NaClO_4$, du $KClO_4$ ou leur mélange, du $Li_2SO_4$, du $Na_2SO_4$, du $K_2SO_4$ ou leur mélange. L'électrolyte non électroactif peut aussi être, par exemple, un acide comme $H_3PO_4$, $HClO_4$, $H_2SO_4$, un acide organique ou leur mélange, une base comme LiOH, KOH, NaOH ou leur mélange.

D'une manière générale, les espèces non électro-actives comprennent tous les acides, bases et sels organiques ou minéraux dont les constituants ne changent pas d'état d'oxydation dans le domaine de potentiel utilisé.

De préférence, le temps d'activation $t_a$ d'une impulsion est d'environ 100 millisecondes.

Lorsque l'excitation électrique est sous la forme de plusieurs impulsions électriques, les impulsions peuvent être des impulsions de valeurs d'amplitude négatives et des impulsions de valeurs d'amplitude positives, éventuellement disposées en alternance. De préférence, lorsque l'excitation électrique est sous la forme de plusieurs impulsions électriques, au moins une des impulsions est une impulsion anodique et au moins une des impulsions est une impulsion cathodique. Selon une variante possible du procédé, il est alors préférable que la ou les impulsions anodiques soient alternées avec la ou les impulsions cathodiques.

De préférence, le diamant dopé de l'électrode est dopé par un agent dopant choisi dans le groupe constitué par le bore, l'azote, le phosphore, le nickel, le soufre et les mélanges de ceux-ci.

Un des avantages du procédé selon l'invention est qu'il permet d'activer électrochimiquement une électrode à base de diamant dopé. Il permet également de réactiver électrochimiquement une telle électrode (c'est-à-dire de rétablir la réactivité initiale de l'électrode), qui aurait, du fait d'une utilisation intensive dans le domaine de la mesure électrochimique (électrode, capteur...), perdu toute ou partie de sa réactivité.

De même, lorsque l'électrode n'a pas été utilisée pendant une longue période de temps, il est aisé d'exécuter le procédé d'activation selon l'invention afin de s'assurer de l'activation de l'électrode, avant de l'utiliser pour réaliser des mesures, et ainsi s'assurer l'obtention de résultats fiables et reproductibles.

Par conséquent, la présente invention concerne également l'utilisation d'un procédé d'activation électrochimique tel que précédemment défini pour restaurer la réactivité électrochimique d'une électrode à base de diamant dopé. Il peut notamment être nécessaire de restaurer la réactivité électrochimique d'une électrode à base de diamant dopé ayant perdu une partie de sa réactivité suite à un entreposage à l'air de longue durée, suite à une utilisation analytique intensive dans le domaine de l'électrochimie ou encore suite à un encrassement par des composés organiques divers (biofilm, lipofilm, bactéries, microalgues...).

Un autre avantage de l'invention est que la solution aqueuse contenant un électrolyte qui est utilisée pour activer l'électrode et/ou pour restaurer la réactivité électrochimique de ladite électrode peut éventuellement être la même solution aqueuse dans laquelle l'électrode perd sa réactivité électrochimique. Ainsi, les électrodes en diamant dopé qui auraient perdu leur réactivité ($k_0$) du fait de leur encrassement dans un milieu (urine, sang, eau de mer, boisson aromatisée au cola...), peuvent, en utilisant le procédé d'activation selon l'invention, être réactivées au sein de ce même milieu.

Une électrode à base de diamant dopé, activée ou réactivée à l'aide du procédé selon l'invention, peut être utilisée pour l'analyse électrochimique, la détection d'éléments traces... ou comme électrode dans des détecteurs en biotechnologie et/ou dans des applications de greffage.

Une telle électrode peut également être utilisée pour la dépollution des effluents des industries chimique, métallurgique, agroalimentaire ou des eaux urbaines.

Un autre avantage du procédé selon l'invention est que l'activation ou la réactivation d'une électrode à base de diamant dopé peut être réalisée très rapidement. En effet, en adaptant les paramètres de densité de courant ou de tension, de durée des impulsions, ainsi que les paramètres de durée totale de l'excitation électrique, le nombre d'impulsions, la concentration et le type d'électrolyte, on peut rapidement obtenir une électrode ayant une constante de vitesse de transfert électronique ($k_0$) supérieure ou égale à $10^{-3}$ cm/s (mesuré par EIS au potentiel de circuit ouvert avec un couple redox rapide).

Par exemple, lorsqu'on applique des impulsions de courant à l'électrode, plus la densité de courant appliquée lors de l'activation est élevée, moins le temps nécessaire à l'activation ou à la réactivation de l'électrode sera long.

Ainsi, contrairement aux autres techniques connues d'activation qui sont relativement longues, le procédé d'activation selon l'invention peut être réalisé très rapidement, c'est-à-dire au plus en 1 minute.

En outre, du fait que la durée des impulsions est très courte, les tensions ou courants qu'il est possible d'appliquer pour réaliser l'activation d'une électrode selon l'invention peuvent être à des valeurs relativement hautes, qui, dans d'autres procédés d'activation de l'art antérieur, auraient pour effet de dégrader ou détruire l'électrode.

D'autre part, comme l'électrode peut être activée dans une large gamme de solutions aqueuses ioniques et de pH, y compris les fluides biologiques (comme par exemple l'urine, le sang...) et environnementaux (comme par exemple l'eau de mer, l'eau de rivière...), le procédé d'activation selon l'invention peut être utilisé dans le domaine de la biotechnologie et le domaine environnemental.

Enfin, le procédé d'activation électrochimique selon l'invention permet d'accroitre considérablement la durée d'utilisation des électrodes en diamant dopé tout en utilisant un minimum de ressources et un minimum de temps. En effet, contrairement aux techniques de traitements de surface décrites dans l'art antérieur, par exemple les traitements anodiques, cathodiques et thermiques, le procédé d'activation selon l'invention est relativement plus simple à mettre en oeuvre, il est rapide et requiert peu de ressources (l'électrolyte utilisé pouvant, dans bien des cas, être également le milieu liquide dans lequel l'électrode a perdu sa réactivité).

L'invention sera mieux comprise et d'autres avantages et particularités apparaîtront à la lecture de la description qui va suivre, donnée à titre d'exemple non limitatif, accompagnée des figures annexées 1 à 9.

## BRÈVE DESCRIPTION DES DESSINS

La figure 1 représente un exemple d'une suite d'impulsions de courant anodique et cathodique, parmi lesquelles seules certaines impulsions participent à l'activation électrochimique d'une électrode de diamant selon le procédé de l'invention. On précise que les dimensions ne sont ici pas représentées à l'échelle.

La figure 2 représente de manière schématique le montage à 3 électrodes utilisé pour réaliser le procédé d'activation électrochimique selon l'invention.

La figure 3 présente deux spectroscopies d'impédance électrochimique (EIS) de l'électrode #1, respectivement avant et après activation électrochimique en utilisant le procédé selon l'invention, un grossissement d'une portion de ces deux spectres étant rajouté dans la partie supérieure de la figure 3.

La figure 4 présente la voltamétrie cyclique de l'électrode #1, telle que définie ci-après, avant et après son activation en utilisant le procédé d'activation électrochimique selon l'invention.

La figure 5 présente la stabilité, au cours du temps, de la résistance de transfert $R_T$ de l'électrode #1 activée en utilisant le procédé d'activation selon l'invention.

La figure 6 présente la voltamétrie cyclique de l'électrode #1 non activée, réalisée dans de l'urine, au cours de trois balayages successifs, montrant la dégradation des capacités électrochimiques de l'électrode #1 non activée au fur et à mesure de la réalisation des différents balayages.

La figure 7 présente la valeur de la densité de courant du premier pic obtenu au cours du premier balayage de voltamétrie cyclique pour différents essais réalisés avec l'électrode #2.

La figure 8 présente la valeur du potentiel d'oxydation du premier pic obtenu au cours du premier balayage de voltamétrie cyclique pour différents essais réalisés avec l'électrode #2.

## EXPOSÉ DÉTAILLÉ DE MODES DE RÉALISATION PARTICULIERS

Dans la présente invention, l'électrode de travail est une électrode à base de diamant dopé.

Par « électrode à base de diamant dopé », on entend, dans le cadre de la présente invention, toute électrode dont le ou un des constituants est du diamant dopé, le diamant dopé étant toute forme polycristalline de diamant dopé ayant des tailles de grains allant de 5 nm à plusieurs micromètres (la taille des grains désignant la plus grande dimension de ces grains).

Selon la taille des grains, on pourra donc avoir du diamant « ultrananocristallin », « nanocristallin » ou « microcristallin ». De même, dans le cadre de la présente invention, une électrode à base de diamant dopé pourra donc aussi bien être une électrode uniquement constituée de diamant dopé qu'une électrode dans laquelle le diamant dopé ne constitue qu'une partie de cette dernière. Dans ce dernier cas, le diamant dopé peut se présenter sous forme d'une couche mince, continue ou discontinue, comme un film en surface d'un substrat.

La formation d'une électrode à base de diamant dopé est connue de l'homme du métier.

La croissance de diamant synthétique dopé est généralement obtenue en faisant croître un film mince de diamant dopé sur un substrat par dépôt chimique à partir d'une phase vapeur (CVD) assistée par plasma, le plasma pouvant être créé en utilisant une source d'énergie telle que des micro-ondes (dépôt MPCVD), des Radio-Fréquences (dépôt RFCVD) ou un filament chaud (dépôt HFCVD). On obtient un film de diamant dopé dont l'épaisseur est comprise typiquement entre 50 nm et 100 micromètres.

La phase vapeur utilisée comprend de l'hydrogène et une source de carbone, par exemple un alcane, généralement du méthane, ainsi qu'un agent dopant, par exemple le bore. Dans le cadre de l'invention, lorsque le diamant est dopé au bore, la concentration en bore sera préférentiellement comprise entre $10^{20}$ et $2.10^{21}$ atomes de bore par $cm^3$.

Le dispositif que nous utilisons pour mettre en oeuvre le procédé d'activation selon la présente invention est de préférence un montage dit à trois électrodes, c'est-à-dire que les expériences d'activation sont menées dans une cellule électrochimique équipée d'une électrode de référence, d'une électrode de travail et d'une contre électrode.

Toute électrode de référence peut être utilisée. L'électrode de référence est soit une électrode de type ECS (Electrode au Calomel Saturé), soit une électrode de référence Ag/AgCl, [KCl] = 3 M, soit éventuellement un simple fil de platine préalablement passé à la flamme (nettoyage). Dans ce dernier cas, on parlera alors d'électrode de pseudo-référence. A ce propos, on précise que l'homme du métier connaît les électrodes de référence et sait déterminer, sans avoir à faire preuve d'effort inventif, quelle électrode de référence il convient d'utiliser.

L'électrode de travail est l'électrode de diamant dopé et la contre-électrode peut, quant à elle, être une grille de platine possédant une surface au moins cinq fois supérieure à celle de l'électrode de travail.

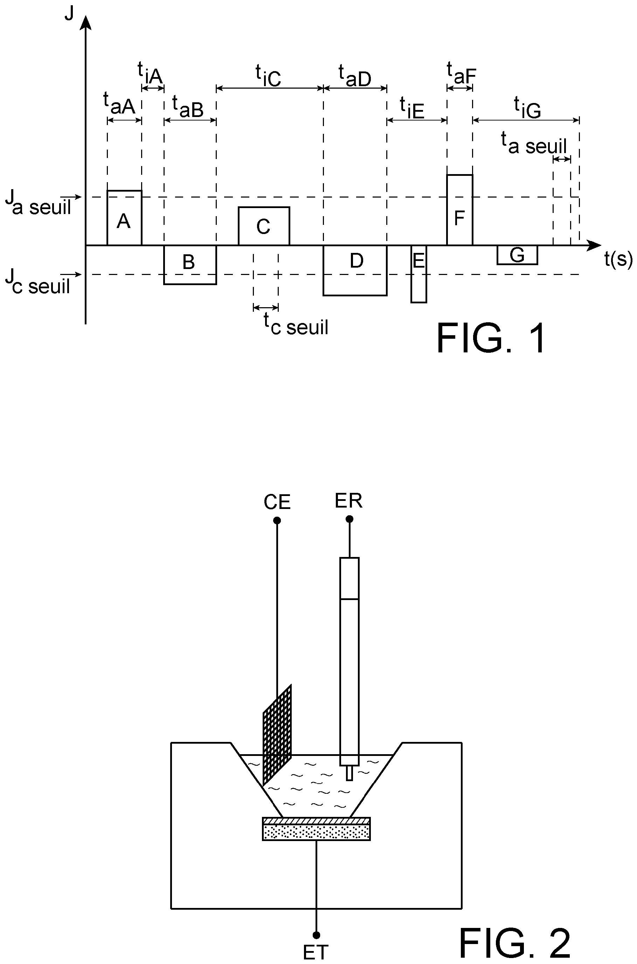

La figure 2 présente un exemple de montage à trois électrodes possible, dans lequel la contre-électrode (CE) et l'électrode de référence (ER) sont des électrodes dites plongeantes, tandis que l'électrode de travail (ET) forme le fond de la cellule électrochimique.

Une variante de ce montage peut consister en un montage à trois électrodes plongeantes.

Il est également possible, dans certains cas, de ne pas utiliser d'électrode de référence ; on se retrouve alors dans le cas d'un montage standard à deux électrodes.

L'électrolyte utilisé dans la cellule électrochimique est une solution aqueuse contenant un électrolyte non électroactif, mais électriquement conducteur, comme par exemple du $NaClO_4$, du $KClO_4$ à n'importe quel pH ou encore du NaOH. A titre d'illustration, l'électrolyte adéquat pour l'activation d'une électrode en diamant dopé au bore peut, par exemple, être du $LiClO_4$ à la concentration de 0,5 M, sans ajustement préalable de la valeur du pH.

Le procédé d'activation selon la présente invention consiste à appliquer, à l'électrode de travail (électrode à base de diamant dopé) en contact avec un électrolyte particulier, une excitation électrique sous la forme d'une ou plusieurs impulsions électriques successives de courte durée, respectant chacune deux conditions cumulatives, à savoir un temps d'activation $t_a$ inférieur ou égal à 10 secondes et supérieur à un temps de valeur seuil qui dépend à la fois de l'électrolyte et du fait que l'impulsion est de courant/tension anodique ou cathodique, et une amplitude supérieure à une amplitude de valeur seuil.

A titre d'exemple, on considère l'activation d'une électrode en diamant dopé dans un électrolyte de $LiClO_4$ en utilisant une suite d'impulsions contenant uniquement des impulsions de courant cathodique.

En appliquant les deux conditions ci-dessus, on constate que, pour contribuer à l'activation de l'électrode, les impulsions doivent avoir une densité de courant supérieure à 1 $\mu A/cm^2$ et un temps d'activation supérieur ou égal à $1/(n \times J_c \times 10^4)$. Il est à noter que si une impulsion ne respecte pas les deux conditions mentionnées ci-dessus, elle est tout de même incluse dans la suite d'impulsions, mais elle ne contribue pas à l'activation et n'est donc pas comptabilisée dans le nombre total d'impulsions n.

Si une unique impulsion de courant cathodique de 10 $\mu A/cm^2$ est appliquée, alors le temps d'activation de cette impulsion doit être au minimum de $1/(1 \times 10^{-5} \times 10^4)$, c'est-à-dire 10 secondes. Comme en outre $t_a$ doit être inférieur ou égal à 10 secondes, l'unique impulsion de courant cathodique aura un temps d'activation de 10 secondes.

Si dix impulsions de 1 $\mu A/cm^2$ sont appliquées, alors le temps d'activation de chaque impulsion est au moins de 10 secondes. Comme $t_a$ doit en outre être inférieur ou égal à 10 secondes, les dix impulsions auront chacune un temps d'activation de 10 secondes. Si l'on suppose que le temps $t_i$ pendant lequel les impulsions sont inactives est de 1 seconde, alors le temps total $t_{tot}$ de l'excitation électrique formée de dix impulsions est de $10 \times (10+1)$, soit 110 secondes.

Si une unique impulsion de 100 mA/cm$^2$ est appliquée, alors le temps d'activation de cette impulsion doit être au minimum de $1/(1 \times 10^2.10^{-3} \times 10^4)$, c'est-à-dire 1 milliseconde, et inférieur ou égal à 10 secondes.

Si l'on considère à présent l'activation d'une électrode en diamant dopé dans un électrolyte de LiClO$_4$ en utilisant une suite d'impulsions contenant uniquement des impulsions de courant anodique, les impulsions doivent avoir une densité de courant supérieure à 3 mA/cm$^2$ et un temps d'activation supérieur ou égal à $1/(n \times J_a \times 10^2)$ et inférieur ou égal à 10 s.

Si une unique impulsion de 10 mA/cm$^2$ est appliquée, alors le temps d'activation de cette impulsion doit être au minimum de $1/(1 \times 10^{-2} \times 10^2)$, c'est-à-dire 1 seconde.

Si 100 impulsions de 100 mA/cm$^2$ sont appliquées, alors le temps d'activation de chaque impulsion doit être au moins de $1/(100 \times 10^{-2} \times 10^2)$, soit 1 milliseconde.

Si l'on considère l'activation d'une électrode en diamant dopé dans un électrolyte de LiClO$_4$ en utilisant une suite d'impulsions contenant uniquement des impulsions de tension anodique, les impulsions doivent avoir une tension supérieure à 2 V et un temps d'activation supérieur ou égal à $1/(n \times V_a \times 10^{-1})$ et inférieur ou égal à 10 s.

Si une unique impulsion de 5 V est appliquée, alors le temps d'activation de cette impulsion doit être au minimum de $1/(1 \times 5 \times 10^{-1})$, c'est-à-dire 2 secondes.

L'électrolyte peut être autre chose que du LiClO$_4$, par exemple de l'urine. Ainsi, si l'on considère l'activation d'une électrode en diamant dopé dans de l'urine en utilisant une suite d'impulsions contenant uniquement des impulsions de courant cathodique, les impulsions doivent avoir une densité de courant supérieure à 400 $\mu$A/cm$^2$ et un temps d'activation supérieur ou égal à $1/(n \times J_c \times 10^4)$.

Si 1000 impulsions de 500 $\mu$A/cm$^2$ sont appliquées, alors le temps d'activation de chaque impulsion doit être au moins de $1/(10^3 \times 500.10^{-6} \times 10^4)$, soit 0,2 milliseconde.

Si l'on considère à présent l'activation d'une électrode en diamant dopé dans un électrolyte de LiClO$_4$ en utilisant une suite d'impulsions contenant à la fois des impulsions de courant cathodique et de courant anodique, alors les impulsions qui contribuent à l'activation de l'électrode sont celles qui, parmi les impulsions de courant anodique, ont une densité de courant supérieure à 3 mA/cm$^2$ et un temps d'activation supérieur ou égal à $1/(n \times J_a \times 10^2)$ et celles qui, parmi les impulsions de courant cathodique, ont une densité de courant supérieure à 1 $\mu$A/cm$^2$ et un temps d'activation supérieur ou égal à $1/(n \times J_c \times 10^4)$. Les impulsions de courant cathodique et anodique sont traitées séparément.

Si l'on prend l'exemple de la suite d'impulsions représentée dans la figure 1, on constate que certaines impulsions ne respectent pas les deux conditions ci-dessus et ne contribuent donc pas à l'activation de l'électrode.

Ainsi, parmi les trois impulsions de courant anodique, l'impulsion « C » ne convient pas car son amplitude maximale est située en dessous de la valeur seuil. Afin de calculer la valeur minimale pour le temps d'activation $t_a$, les impulsions « A » et « F » sont comparées : l'amplitude maximale est celle de l'impulsion « F » et c'est donc elle qui est utilisée pour calculer la valeur minimale du temps d'activation pour les impulsions de courant anodique.

De même, parmi les impulsions de courant cathodique, les impulsions « E » et « G » ne conviennent pas car l'une a une amplitude située en dessous de la valeur seuil et l'autre a un temps d'activation situé en dessous de la valeur minimale de $t_a$. Ainsi, parmi les impulsions restantes, c'est l'amplitude de l'impulsion « D » qui est la plus élevée et qui est prise pour calculer la valeur du temps d'activation $t_a$ minimal.

Les temps $t_a$ et $t_i$ de chacune des impulsions retenues sont représentés dans la figure 1. Le temps total de l'excitation électrique est donc :

$$t_{tot} = \sum_{j=1 \text{ à } n} (t_{aj} + t_{ij}) \text{ avec } n=4$$

c'est-à-dire $t_{tot} = t_{aA} + t_{iA} + t_{aB} + t_{iB} + t_{aD} + t_{iD} + t_{aF} + t_{iF}$

En fait, toutes sortes de combinaisons sont possibles entre les valeurs du nombre d'impulsions, leurs durées et leurs amplitudes.

La gamme des valeurs d'amplitude disponibles est très large. En fait, le choix de la valeur de l'amplitude, pour une durée et un nombre d'impulsions fixés, est uniquement limité par la capacité de l'électrode à résister à ces impulsions sans être détruite. En effet, en utilisant des impulsions de courtes durées, il est tout à fait possible d'appliquer à l'électrode des impulsions de grandes valeurs d'amplitude, ce qui aura pour effet d'aboutir plus rapidement à une activation de l'électrode, sans craindre de détruire l'électrode.

En outre, pour une valeur d'amplitude d'impulsion donnée, de meilleurs résultats peuvent être obtenus en augmentant la durée des impulsions et/ou le nombre d'impulsions.

L'amplitude d'impulsion peut donc être choisie dans une large gamme de valeurs.

L'amplitude de tension appliquée à l'électrode de travail peut, par exemple, être comprise entre 200 mV et 30 V.

L'amplitude d'impulsion de courant peut quant à elle être choisie, par exemple, dans une gamme allant de 10 $\mu$A/cm$^2$ à 50 mA/cm$^2$.

L'amplitude d'impulsion de courant peut également être égale à 0,5 A/cm$^2$, à condition que la durée de l'impulsion soit inférieure à quelques millisecondes, c'est-à-dire inférieure à 10 millisecondes.

Quelques exemples de performances obtenues pour des électrodes activées par le procédé de l'invention sont donnés ci-après.

### A-1. L'électrode #1 (électrode B230210-7)

L'électrode #1 est obtenue en faisant croître un film mince de diamant dopé au bore par dépôt MPECVD (pour « Microwave Plasma Enhanced Chemical Vapor Déposition » en anglais) sur une face d'un substrat de silicium (111) dopé au bore de 500 $\mu$m d'épaisseur.

L'électrode #1 qui est obtenue a une couche mince de diamant dopé au bore d'une épaisseur d'environ 400 nm et un taux de dopage en bore supérieur à $10^{20}$ et inférieur à $2.10^{21}$ atomes par cm$^3$.

Le montage utilisé est le montage à 3 électrodes illustré dans la figure 2, dans lequel l'électrode de travail est l'électrode #1 et la surface en diamant dopé au bore de l'électrode #1 qui est en contact avec l'électrolyte est de 0,33 cm$^2$.

Une couche en alliage eutectique Indium-Gallium est disposée entre le substrat en silicium de l'électrode #1 et une plaque en cuivre afin de créer un contact électrique de nature ohmique (non représenté).

L'électrode de référence est une électrode de type Ag/AgCl, [KCl] = 3 M, et la contre-électrode est une grille de platine possédant une surface de 4 cm$^2$.

La constante de vitesse de transfert électronique ($k_0$) de l'électrode #1 est déterminée expérimentalement en réalisant une spectroscopie d'impédance électrochimique (EIS) à l'aide d'une solution équimolaire d'un couple redox rapide (Fe (CN)$_6^{3-/4-}$) et au potentiel d'équilibre ($E_0$ = + 0,21 V/ECS). Pour cela, on utilise un montage à 3 électrodes tel qu'illustré dans la figure 2, l'électrode #1 formant l'électrode de travail, un fil de platine servant d'électrode de référence et une grille de platine formant la contre-électrode, et on maintient l'électrode #1 à un potentiel en circuit ouvert dans une solution à 0,5 M de KCl contenant une concentration équimolaire à $10^{-3}$ M d'un couple redox rapide (Fe (CN)$_6^{3-/4-}$).

La spectrométrie EIS est réalisée sur une large gamme de fréquences allant de 50 kHz à 10 Hz, avec des points qui sont espacés de manière logarithmique, et une amplitude de tension de 0,01 V en valeur efficace.

Pour l'électrode #1 non activée, on obtient une constante ($k_0$) d'environ $1,6.10^{-3}$ cm/s.

Après avoir déterminé la valeur de la constante ($k_0$), on procède au lavage, puis au séchage sous un flux d'argon de l'électrode #1, avant de lui faire subir une voltamétrie cyclique dans une solution de KCl à 0,5 M contenant une concentration à $10^{-3}$ M d'un couple redox rapide (Fe(CN)$_6^{3-/4-}$), ce qui permet de connaitre l'amplitude des pics d'oxydation et de réduction (densité de courant et potentiel) de l'électrode #1.

Pour une vitesse de balayage de 0,1 V/s, la différence de potentiel ($\Delta E_p$) entre les pics d'oxydation et de réduction est mesurée à environ 232 mV.

La densité de courant anodique ($J_a$) est de 182 $\mu$A/cm$^2$ et la densité de courant cathodique ($J_c$) est de -191 $\mu$A/cm$^{-2}$.

Après avoir obtenu toutes ces mesures, on procède alors à l'activation électrochimique selon l'invention de l'électrode #1.

Pour cela, on utilise le même montage à 3 électrodes que celui utilisé et décrit ci-dessus pour la mesure de la constante ($k_0$), mais l'électrolyte est une solution de LiClO$_4$ à 0,5 M.

Comme l'électrode est activée électrochimiquement dans un électrolyte ne contenant pas d'espèces électro-actives, on peut appliquer, au choix, une suite d'impulsions de courant cathodique, de courant anodique, de tension cathodique, de tension anodique ou un mélange de plusieurs de ces impulsions, les impulsions devant respecter les deux conditions mentionnées ci-dessus, à savoir la condition sur l'amplitude minimale et la condition sur le temps d'activation minimal (avec $t_a$ inférieur ou égal à 10 secondes).

Si l'on applique une suite d'impulsions de courant cathodique dans un tel électrolyte, alors la valeur minimale de l'amplitude est de -1 $\mu$A/cm$^2$. Ainsi, si l'on souhaite appliquer 50 impulsions de courant cathodique ayant chacune une amplitude de -1,5 mA/cm$^2$, alors la valeur minimale du temps d'activation est de $1/(50 \times 1,5.10^{-3} \times 10^4)$, soit 1,33 milliseconde.

On peut donc, par exemple, choisir un temps d'activation $t_a$ de 0,1 s et un temps d'inactivation $t_i$ (correspondant à la durée entre deux impulsions actives consécutives) lui aussi de 0,1 s, la durée d'une impulsion étant alors de 0,2 s. Le temps total de l'activation est de $(50 \times 0,2)$, soit 10 s.

On peut constater que le rapport $t_a/t_i$ est bien supérieur à $10^{-4}$.

La constante ($k_0$) mesurée après activation est d'environ 0,04 cm/s et la différence de potentiel entre les pics d'oxydation et de réduction est d'environ 71 mV.

La densité de courant anodique ($J_a$) est augmentée à 297 $\mu$A/cm$^2$ et la densité de courant cathodique ($J_c$) est

de -306 $\mu$A/cm$^2$.

Les résultats obtenus avant et après l'activation sont regroupés dans le tableau 1 ci-dessous :

Tableau 1

|  | k$_0$ (cm/s) | $\Delta$E$_p$ (mV) | J$_a$ ($\mu$A/cm$^2$) | J$_c$ ($\mu$A/cm$^2$) |
|---|---|---|---|---|
| **Avant** activation | $\approx$ 0,0016 | $\approx$ 232 | 182 | -191 |
| **Après** activation | $\approx$ 0,04 | $\approx$ 71 | 297 | -305 |

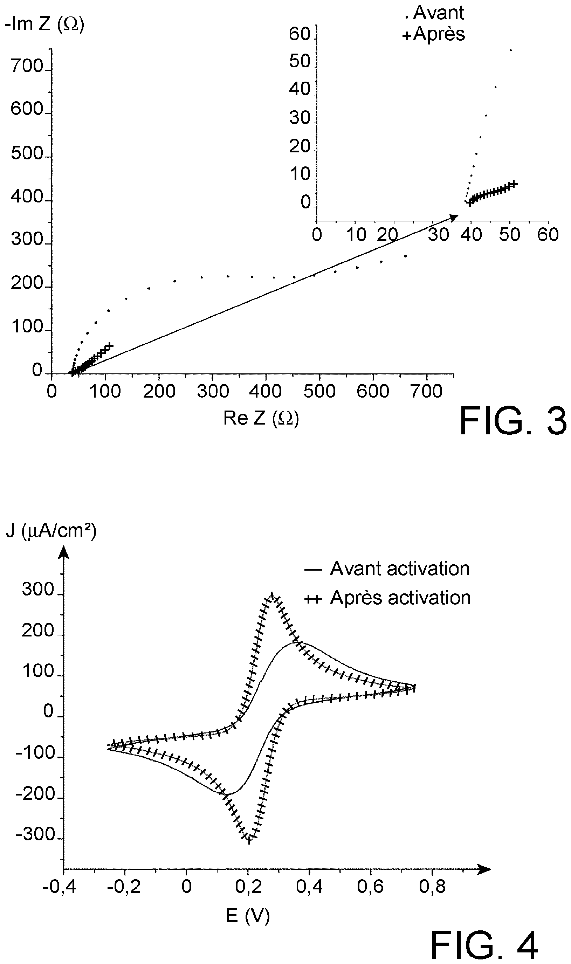

Dans les figures 3 et 4, nous avons représenté les résultats obtenus, avant et après activation de l'électrode #1, respectivement pour les spectroscopies d'impédance électrochimique (EIS) (figure 3) et pour les voltamétries cycliques (figure 4).

On constate ainsi que, avant activation, la réactivité initiale de l'électrode #1 est satisfaisant (k$_0$ $\approx$ 0,0016 cm/s), tandis que les courbes de voltamétrie cyclique (corrigées de la chute ohmique) montrent une séparation des pics anodiques et cathodiques ($\Delta$E$_p$) élevée nettement supérieure à la valeur théorique de 60 mV.

L'activation selon l'invention permet d'accroître la valeur de (k$_0$) (et donc la réactivité de l'électrode) par un facteur 25 et d'abaisser d'un facteur 3 la différence de potentiel entre les pics d'oxydation et de réduction, en appliquant une excitation électrique, sous la forme de 50 impulsions, pendant une durée totale (t$_{tot}$) de seulement 10 secondes.

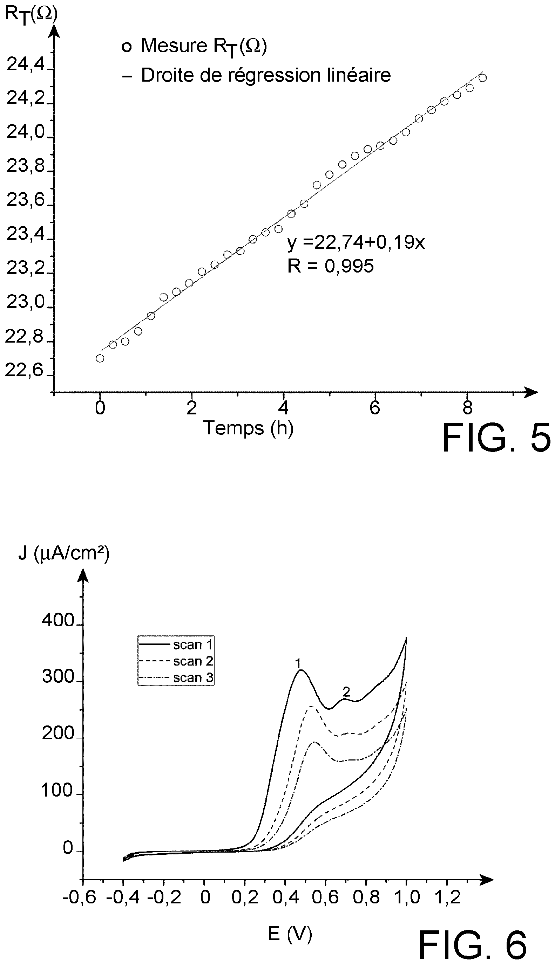

En outre, la réactivité de l'électrode #1 ainsi activée est stable dans le temps, comme on peut le constater en consultant la figure 5, représentant la stabilité au cours du temps de la résistance de transfert R$_T$ de l'électrode #1 activée.

### A-2. L'électrode #2 (électrode B71209-16)

Comme l'électrode #1 ci-dessus, l'électrode #2 est obtenue en faisant croître un film mince de diamant dopé au bore par dépôt MPCVD sur une face d'un substrat de silicium (111) dopé au bore de 500 $\mu$m d'épaisseur, obtenant ainsi une couche mince de diamant dopé au bore d'une épaisseur d'environ 400 nm et une concentration en bore supérieure à 10$^{20}$ atomes par cm$^3$.

Une voltamétrie cyclique avec une vitesse de balayage de 0,1 V/s pendant trois balayages (« scan ») a été réalisée dans de l'urine humaine (figure 6), en utilisant l'électrode #2 comme électrode de travail, une grille de platine d'une surface de 4 cm$^2$ comme contre-électrode et une électrode Ag/AgCl, [KCl] = 3 M, comme électrode de référence dans un montage à 3 électrodes.

Dans cette figure 6, deux pics d'oxydation (1) et (2) peuvent être détectés à partir des courbes de voltamétrie cyclique, ces pics correspondant respectivement aux potentiels d'oxydation 0,3-0,55 V et 0,6-0,7 V. On constate que l'amplitude de ces trois pics diminue au fur et à mesure des balayages successifs, du fait de l'encrassement de l'électrode de travail. On constate également que les pics d'oxydation (1) et (2) sont déviés vers des valeurs de potentiel supérieures, au fur et à mesure des balayages successifs. L'encrassement de l'électrode peut être attribué à la perte de réactivité de l'électrode, c'est-à-dire à la perte de la capacité à échanger des électrons rapidement avec des espèces électrochimiquement actives.

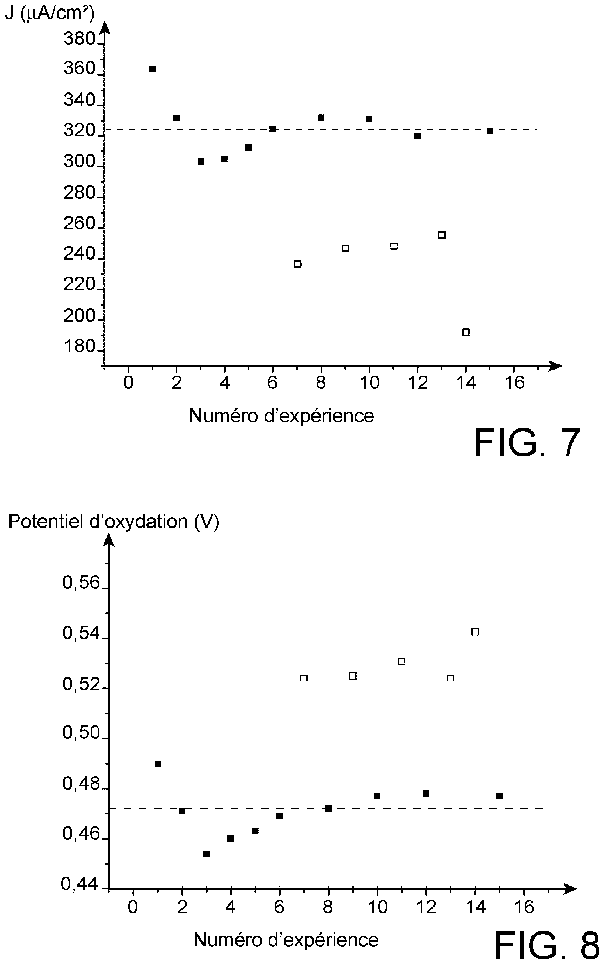

Une série de 15 expériences de voltamétrie cyclique, comprenant chacune deux balayages, a été réalisée dans de l'urine humaine ; la densité de courant, ainsi que la valeur absolue du potentiel d'oxydation du premier pic du premier balayage a été notée pour 14 expériences et la valeur absolue du potentiel d'oxydation du premier pic du second balayage a été notée pour 1 des expériences (correspondant à l'électrode utilisée au cours de l'expérience portant le numéro 14). Les résultats obtenus sont respectivement illustrés dans la figure 7 et la figure 8.

Chaque électrode utilisée est une électrode #2 telle que décrite ci-dessus (mesure symbolisée par un carré plein) et chacune des électrodes, à l'exception des électrodes utilisées dans les expériences portant les numéros 7, 9, 11, 13 et 14 (mesure symbolisée par un carré vide), a préalablement été activée dans l'urine.

Ici, comme l'électrolyte contient des espèces électro-actives, l'activation électrochimique de l'électrode peut se faire uniquement des impulsions de courant cathodique, des impulsions de tension cathodique ou un mélange de ces impulsions.

Si l'on choisit d'appliquer une suite d'impulsions de courant cathodique dans un tel électrolyte, alors la valeur minimale de l'amplitude est de -400 $\mu$A/cm$^2$. Ainsi, si l'on souhaite appliquer 50 impulsions de courant cathodique ayant chacune une amplitude de -15 mA/cm$^2$, alors la valeur minimale du temps d'activation est de $1/(50 \times 15.10^{-3} \times 10^4)$, soit 0,133 milliseconde.

On peut donc par exemple choisir un temps d'activation t$_a$ et un temps d'inactivation t$_i$ de 0,1 s, ce qui correspond à une excitation électrique, formée de 50 impulsions, appliquée pendant une durée totale de 10 secondes.

En comparant les résultats obtenus au cours des 15 expériences (figure 7), on constate que le pic d'oxydation (1) est considérablement réduit en amplitude de densité de courant lorsqu'une voltamétrie cyclique est réalisée à l'aide d'une électrode #2 non activée, alors que l'amplitude reste quasiment la même pour les électrodes activées (la densité de courant moyenne, obtenue en réalisant la moyenne des mesures obtenues avec les électrodes activées, étant de 324 $\mu$A/cm$^2$ et étant représentée par la ligne en pointillées).

Pour l'expérience n°14, qui, on le rappelle, correspond à la valeur absolue du potentiel d'oxydation du premier pic du second balayage avec une électrode #2 non activée, on constate que la valeur absolue du pic est encore plus basse que les autres expériences 7, 9, 11 et 13 réalisées avec des électrodes non activées.

De même, on constate dans la figure 8 que la valeur du potentiel d'oxydation des électrodes 7, 9, 11, 13 et 14 n'ayant pas été activées augmente (potentiel anodique augmenté) par rapport au potentiel d'oxydation moyen (la densité de courant moyenne (obtenue en réalisant la moyenne des mesures obtenues avec les électrodes activées) étant de 0,472 V et étant représentée par la ligne en pointillées).

Avec ces deux exemples, nous venons de confirmer que le procédé d'activation selon l'invention permet d'obtenir des électrodes performantes en termes de réactivité.

Nous allons à présent décrire quelques exemples d'application du procédé d'activation électrochimique selon l'invention.

## B.1. Analyse de l'urine

Compte-tenu de la rentabilité, de la précision des mesures et du court délai nécessaire à la quantification des analytes, les techniques de mesure électrochimiques sont plus avantageuses que d'autres techniques.

De ce fait, les électrodes à base de diamant dopé, et en particulier les électrodes à base de diamant dopé au bore, sont couramment utilisées en tant que capteurs électrochimiques.

De plus, les électrodes à base de diamant dopé, et en particulier les électrodes à base de diamant dopé au bore, sont robustes et résistantes à la corrosion, ce qui les rend particulièrement adaptées à une utilisation comme capteur électrochimique.

Les électrodes à base de diamant dopé, et en particulier les électrodes à base de diamant dopé au bore, peuvent ainsi être utilisées en tant que capteur électrochimique pour l'analyse des urines d'un patient et la détection de nombreux analytes. Il est en effet souvent nécessaire de contrôler et de quantifier, en temps réel, un ou plusieurs analytes présents dans les urines d'un patient, en particulier les patients admis dans les unités de soins intensifs.

Comme nous l'avons constaté précédemment dans la figure 6, bien qu'une électrode en diamant dopé au bore puisse détecter les deux pics d'oxydation d'une voltamétrie cyclique réalisée dans l'urine, l'amplitude de ces pics a cependant tendance à décroitre au fur et à mesure des balayages successifs, du fait de l'encrassage de l'électrode de travail.

Or, il serait très couteux de remplacer l'électrode de travail en diamant dopé au bore après chaque mesure et peu évident de réaliser des traitements de surface de l'électrode, comme par exemple une hydrogénation dans un plasma d'hydrogène.

Le procédé d'activation selon l'invention permet de rétablir la réactivité de l'électrode de travail en procédant à son activation électrochimique dans un électrolyte aqueux, en moins de 10 secondes. Il est tout à fait possible de réaliser l'activation dans l'électrolyte au sein duquel l'électrode s'est encrassée, comme décrit ci-dessus avec l'urine, et récupérer presque la même réactivité que ladite électrode activée présentait avant son encrassage.

## B.2. Contrôle des polluants environnementaux

Les polluants environnementaux, comme par exemple le trinitrotoluène (TNT) utilisé comme matériau explosif, ont des effets indésirables sur les humains, comme des effets carcinogènes, de l'anémie, des effets hépatiques, mutagènes...

Des électrodes à base de diamant dopé, et en particulier des électrodes à base de diamant dopé au bore, peuvent être utilisées pour la détection du TNT.

A titre d'exemple, des traces de TNT ont été relevées dans différentes zones marines suite à des fuites d'exploitations minières en mer et mesurées à l'aide d'électrodes BDD (document **[5]**). Cependant, du fait de la présence d'espèces de masse moléculaire importante, les électrodes sont rapidement encrassées lors d'une mesure à long terme (c'est-à-dire sur plusieurs heures) ; l'utilisation du procédé d'activation selon l'invention permet de réactiver les électrodes rapidement et d'améliorer leur réutilisation. De plus, la réactivation des électrodes peut, avec le procédé selon l'invention, être réalisée directement dans la solution que l'on cherche à analyser, pour peu que cette solution soit une solution aqueuse comportant un électrolyte électriquement conducteur.

## BIBLIOGRAPHIE

[1] I. Yagi et alJournal of Electroanalytical Chemistry, (1999), 473, pp 173-178

[2] G. Salazar-Banda et al"On the changing electrochemical behaviour of boron-doped diamond surfaces with time after cathodic pre-treatments", Electrochimica Acta 51 (2006), p 4612 - 4619

[3] A. Kraft"Doped Diamond: A Compact Review on a New, Versatile Electrode Material", Int. J. Electrochem. Sci., 2 (2007), p 355 - 385

[4] J. de Sanoit et E. Vanhove
*"Procédé d'activation d'une électrode à base de diamant, électrode ainsi obtenue et ses utilisations",* WO 2008/148861, 2008

[5] J. de Sanoit et al"Electrochemical diamond sensors for TNT detection in water", Electrochimica Acta 54 (2009), p 5688 - 5693

[6] E. Mahé et al"Electrochemical reactivity at graphitic micro-domains on polycrystalline boron doped diamond thin-films electrodes", Electrochemica Acta 50 (2005), p 2263-2277

**Revendications**

1. Procédé d'activation électrochimique d'une électrode à base de diamant dopé, ledit procédé comprenant la mise en contact de l'électrode avec une solution aqueuse contenant un électrolyte contenant ou non des espèces électro-actives et l'application, à ladite électrode, d'une excitation électrique sous la forme d'une ou plusieurs impulsions électriques, dans lequel chaque impulsion contribue à l'activation de l'électrode pendant un temps $t_a$ à condition que :

   1°) l'amplitude de cette impulsion pendant ce temps $t_a$ soit, en valeur absolue, supérieure à une amplitude seuil ayant l'une des valeurs ci-après :

      • lorsque l'électrolyte ne contient pas d'espèces électro-actives :

         1 $\mu A.cm^{-2}$ si l'impulsion est une impulsion de courant cathodique ;
         3 $mA.cm^{-2}$ si l'impulsion est une impulsion de courant anodique ;
         200 mV si l'impulsion est une impulsion de tension cathodique ; et
         2 V si l'impulsion est une impulsion de tension anodique ;

      • lorsque l'électrolyte contient des espèces électro-actives :

         400 $\mu A.cm^{-2}$ si l'impulsion est une impulsion de courant cathodique ;
         2 V si l'impulsion est une impulsion de tension cathodique ; et

   2°) le temps $t_a$ d'activation, exprimé en secondes, est, pour chaque impulsion, inférieur ou égal à 10 et respecte, pour chaque impulsion, l'une des formules ci-après :

   $$t_a \geq \frac{1}{n_c \times |J_{cMax}| \times K_1} \quad \text{pour une impulsion de courant cathodique ;}$$

   $$t_a \geq \frac{1}{n_a \times |J_{aMax}| \times K_2} \quad \text{pour une impulsion de courant anodique ;}$$

   $$t_a \geq \frac{1}{n_c \times |V_{cMax}| \times K_3} \quad \text{pour une impulsion de tension cathodique ;}$$

   $$t_a \geq \frac{1}{n_a \times |V_{aMax}| \times K_3} \quad \text{pour une impulsion de tension anodique ;}$$

   dans lesquelles :

$n_c$ est le nombre total d'impulsions cathodiques formant l'excitation électrique ;

$n_a$ est le nombre total d'impulsions anodiques formant l'excitation électrique ;

$|J_{cMax}|$ est la valeur maximale, exprimée en valeur absolue et en Ampères par cm$^2$, du courant catho-dique parmi les $n_c$ impulsions ;

$|J_{aMax}|$ est la valeur maximale, exprimée en valeur absolue et en Ampères par cm$^2$, du courant anodique parmi les $n_a$ impulsions ;

$|V_{cMax}|$ est la valeur maximale, exprimée en valeur absolue et en Volts, de la tension cathodique parmi les $n_c$ impulsions ;

$|V_{aMax}|$ est la valeur maximale, exprimée en valeur absolue et en Volts, de la tension anodique parmi les $n_a$ impulsions ;

$$K_1 = 10^4 \ A^{-1}.cm^2.s^{-1} \ ;$$

$$K_2 = 10^2 \ A^{-1}.cm^2.s^{-1} \ ;$$

$$K_3 = 0,1 \ V^{-1}.s^{-1} \ ;$$

et dans lequel l'excitation électrique est appliquée durant un temps total $t_{tot}$ répondant à la formule ci-après :

$$t_{tot} = \sum_{j=1 \ \text{à} \ n} (t_{aj} + t_{ij})$$

où n est le nombre total d'impulsions formant l'excitation électrique avec $n=n_c+n_a$ et $t_{aj}$ est le temps d'activation $t_a$ pendant lequel la j$^{\text{ième}}$ impulsion est active, $t_{ij}$ est le temps $t_i$ pendant lequel la j$^{\text{ième}}$ impulsion est inactive et le rapport $t_{aj}/t_{ij}$ est supérieur à $10^{-4}$.

2. Procédé selon la revendication 1, dans lequel ladite ou lesdites impulsion(s) électrique(s) ont une amplitude maximale en un temps d'activation $t_a$ minimal.

3. Procédé selon la revendication 1 ou 2, dans lequel le rapport $t_a/t_i$ est supérieur ou égal à 1 pour chacune des impulsions.

4. Procédé selon l'une quelconque des revendications 1 à 3, dans lequel les impulsions sont comprises entre 10 et 50 impulsions.

5. Procédé selon l'une quelconque des revendications 1 à 4, dans lequel les impulsions sont périodiques.

6. Procédé selon l'une quelconque des revendications 1 à 5, dans lequel les impulsions de courant cathodique ont une amplitude maximale comprise entre 400 $\mu$A/cm$^2$ et 5 mA/cm$^2$.

7. Procédé selon l'une quelconque des revendications 1 à 5, dans lequel les impulsions de tension cathodique ont une amplitude maximale comprise entre 2 V et 5 V.

8. Procédé selon l'une quelconque des revendications 1 à 7, dans lequel l'électrolyte ne contient pas d'espèces électro-actives.

9. Procédé selon l'une quelconque des revendications 1 à 8, dans lequel le temps d'activation $t_a$ d'une impulsion est d'environ 100 millisecondes.

10. Procédé selon l'une quelconque des revendications 1 à 9, dans lequel, lorsque l'excitation électrique est sous la forme de plusieurs impulsions électriques, au moins une des impulsions est une impulsion anodique et au moins une des impulsions est une impulsion cathodique.

**11.** Procédé selon la revendication 10, dans lequel la ou les impulsions anodiques sont alternées avec la ou les impulsions cathodiques.

**12.** Procédé selon la revendication 1, dans lequel l'électrolyte contenant des espèces électro-actives est choisi parmi un sel ionique électroactif, de l'urine, du sang, du vin, une boisson aromatisée au cola, de l'eau de mer.

**13.** Procédé selon la revendication 1, dans lequel l'électrolyte ne contenant pas d'espèces électro-actives est choisi parmi du $LiClO_4$, du $NaClO_4$, du $KClO_4$ ou leur mélange, du $Li_2SO_4$, du $Na_2SO_4$, du $K_2SO_4$ ou leur mélange.

**14.** Utilisation d'un procédé selon l'une quelconque des revendications 1 à 13 pour restaurer la réactivité électrochimique d'une électrode à base de diamant dopé.

**15.** Utilisation selon la revendication 14, dans laquelle la solution aqueuse contenant un électrolyte utilisée pour restaurer la réactivité électrochimique de ladite électrode est la même solution aqueuse dans laquelle l'électrode a, au préalable, perdu sa réactivité électrochimique.

**Patentansprüche**

**1.** Verfahren zur elektrochemischen Aktivierung einer Elektrode auf Basis von dotiertem Diamant, wobei das Verfahren das Inkontaktbringen der Elektrode mit einer wässrigen Lösung umfasst, die einen Elektrolyten enthält, der wohl oder nicht elektroaktive Spezies enthält, sowie das Anlegen einer elektrischen Erregung an die Elektrode in Form eines oder mehrerer elektrischer Pulse, wobei jeder Puls zur Aktivierung der Elektrode während einer Zeit $t_a$ beiträgt, unter der Voraussetzung, dass:

1°) die Amplitude dieses Pulses während dieser Zeit $t_a$ als Absolutwert größer als eine Schwellenamplitude ist, die einen der nachfolgenden Werte hat:

• wenn der Elektrolyt keine elektroaktiven Spezies enthält:

1 $\mu A.cm^{-2}$, wenn der Puls ein Kathodenstrompuls ist;
3 $mA.cm^{-2}$, wenn der Puls ein Anodenstrompuls ist;
200 mV, wenn der Puls ein Kathodenspannungspuls ist; und
2 V, wenn der Puls ein Anodenspannungspuls ist;

• wenn der Elektrolyt elektroaktive Spezies enthält:

400 $\mu A.cm^{-2}$, wenn der Puls ein Kathodenstrompuls ist;
2 V, wenn der Puls ein Kathodenspannungspuls ist; und

2°) die Aktivierungszeit $t_a$, ausgedrückt in Sekunden, für jeden Puls kleiner oder gleich 10 ist, und für jeden Puls eine der nachfolgenden Formeln erfüllt:

$$t_a \geq \frac{1}{n_c \times \left| J_{cMax} \right| \times K_1} \quad \text{für einen Kathodenstrompuls;}$$

$$t_a \geq \frac{1}{n_a \times \left| J_{aMax} \right| \times K_2} \quad \text{für einen Anodenstrompuls;}$$

$$t_a \geq \frac{1}{n_c \times \left| V_{cMax} \right| \times K_3} \quad \text{für einen Kathodenspannungspuls;}$$

$$t_a \geq \frac{1}{n_a \times \left| V_{aMax} \right| \times K_3} \quad \text{für einen Anodenspannungspuls;}$$

wobei:

$n_c$ die Gesamtzahl von Kathodenpulsen ist, die die elektrische Erregung bilden;

$n_a$ die Gesamtzahl von Anodenpulsen ist, die die elektrische Erregung bilden;

$|J_{cMax}|$ der Maximalwert, ausgedrückt als Absolutwert und in Ampere pro $cm^2$, des Kathodenstroms aus den $n_c$ Pulsen ist;

$|J_{aMax}|$ der Maximalwert, ausgedrückt als Absolutwert und in Ampere pro $cm^2$, des Anodenstroms aus den $n_a$ Pulsen ist;

$|V_{cMax}|$ der Maximalwert, ausgedrückt als Absolutwert und in Volt, der Kathodenspannung aus den $n_c$ Pulsen ist;

$|V_{aMax}|$ der Maximalwert, ausgedrückt als Absolutwert und in Volt, der Anodenspannung aus den $n_a$ Pulsen ist;

$$K_1 \ = 10^4 \ A^{-1}.cm^2.s^{-1};$$

$$K_2 \ = 10^2 \ A^{-1}.cm^2.s^{-1};$$

$$K_3 \ = 0{,}1 \ V^{-1}.s^{-1};$$

und wobei die elektrische Erregung während einer Gesamtzeit $t_{tot}$ angelegt wird, die nachfolgende Formel erfüllt:

$$t_{tot} = \sum_{j=1 \text{ à } n} (t_{aj} + t_{ij})$$

wobei n die Gesamtzahl von Pulsen ist, die die elektrische Erregung bilden, mit $n = n_c + n_a$, und $t_{aj}$ die Aktivierungszeit $t_a$ ist, während der der j-te Puls aktiv ist, wobei $t_{ij}$ die Zeit $t_i$ ist, während der der j-te Puls inaktiv ist und das Verhältnis $t_{aj} / t_{ij}$ größer als $10^{-4}$ ist.

2. Verfahren nach Anspruch 1, wobei der oder die elektrische(n) Puls(e) eine maximale Amplitude in einer minimalen Aktivierungszeit $t_a$ hat/haben.

3. Verfahren nach Anspruch 1 oder 2, wobei das Verhältnis $t_a / t_i$ größer oder gleich 1 für jeden der Pulse ist.

4. Verfahren nach einem der Ansprüche 1 bis 3, wobei die Pulse zwischen 10 und 50 Pulsen enthalten sind.

5. Verfahren nach einem der Ansprüche 1 bis 4, wobei die Pulse periodisch sind.

6. Verfahren nach einem der Ansprüche 1 bis 5, wobei die Kathodenstrompulse eine maximale Amplitude haben, die zwischen 400 $\mu A/cm^2$ und 5 $mA/cm^2$ enthalten ist.

7. Verfahren nach einem der Ansprüche 1 bis 5, wobei die Kathodenspannungspulse eine maximale Amplitude haben, die zwischen 2 V und 5 V enthalten ist.

8. Verfahren nach einem der Ansprüche 1 bis 7, wobei der Elektrolyt keine elektroaktiven Spezies enthält.

9. Verfahren nach einem der Ansprüche 1 bis 8, wobei die Aktivierungszeit $t_a$ eines Pulses ungefähr 100 Millisekunden beträgt.

10. Verfahren nach einem der Ansprüche 1 bis 9, wobei dann, wenn die elektrische Erregung die Form von mehreren elektrischen Pulsen hat, wenigstens einer der Pulse ein Anodenpuls ist, und wenigstens einer der Pulse ein Kathodenpuls ist.

11. Verfahren nach Anspruch 10, wobei der oder die Anodenpuls(e) mit dem oder den Kathodenpuls(en) alterniert/alternieren.

**12.** Verfahren nach Anspruch 1, wobei der Elektrolyt, der elektroaktive Spezies enthält, ausgewählt ist aus einem elektroaktiven ionischen Salz, Urin, Blut, Wein, einem aromatisierten Cola-Getränk, Meerwasser.

**13.** Verfahren nach Anspruch 1, wobei der Elektrolyt, der keine elektroaktiven Spezies enthält, ausgewählt ist aus $LiClO_4$, $NaClO_4$, $KClO_4$ oder ihrer Mischung, $Li_2SO_4$, $Na_2SO_4$, $K_2SO_4$ oder ihrer Mischung.

**14.** Verwendung eines Verfahrens nach einem der Ansprüche 1 bis 13 zum Wiederherstellen der elektrochemischen Reaktivität einer Elektrode auf Basis von dotiertem Diamant.

**15.** Verwendung nach Anspruch 14, wobei die wässrige Lösung, die einen Elektrolyten enthält, die zur Wiederherstellung der elektrochemischen Reaktivität der Elektrode verwendet wird, die gleiche wässrige Lösung ist, in der die Elektrode zuvor ihre elektrochemische Reaktivität verloren hat.

**Claims**

**1.** Electrochemical method of activating a doped diamond-based electrode, said method including bringing the electrode into contact with an aqueous solution containing an electrolyte that may or may not contain electroactive species and applying an electrical excitation to said electrode in the form of one or several electrical pulses, in which each pulse contributes to activation of the electrode for a time $t_a$ provided that:

1°) the absolute value of the amplitude of this pulse during this time $t_a$ exceeds a threshold amplitude with one of the following values:

• when the electrolyte does not contain any electroactive species:

1 $\mu$A.cm$^{-2}$ if the pulse is a cathodic current pulse;
3 mA.cm$^{-2}$ if the pulse is an anodic current pulse;
200 mV if the pulse is a cathodic voltage pulse; and
2 V if the pulse if an anodic voltage pulse;

• when the electrolyte contains electroactive species:

400 $\mu$A.cm$^{-2}$ if the pulse is a cathodic current pulse;
2 V if the pulse is a cathodic voltage pulse; and

2°) the activation time $t_a$ expressed in seconds is less than or equal to 10 for each pulse, and satisfies one of the following formulas for each pulse:

$$t_a \geq \frac{1}{n_c \times \left|J_{cMax}\right| \times K_1} \quad \text{a cathodic current pulse ;}$$

$$t_a \geq \frac{1}{n_a \times \left|J_{aMax}\right| \times K_2} \quad \text{for an anodic current pulse;}$$

$$t_a \geq \frac{1}{n_c \times \left|V_{cMax}\right| \times K_3} \quad \text{for a cathodic voltage pulse ;}$$

$$t_a \geq \frac{1}{n_a \times \left|V_{aMax}\right| \times K_3} \quad \text{for an anodic voltage pulse;}$$

in which:

$n_c$ is the total number of cathodic pulses forming the electrical excitation;
$n_a$ is the total number of anodic pulses forming the electrical excitation;
$\left|J_{cMax}\right|$ is the maximum value expressed as an absolute value in amperes per cm$^2$, of the cathodic current among the $n_c$ pulses;
$\left|J_{aMax}\right|$ is the maximum value expressed as an absolute value in amperes per cm$^2$, of the anodic current among the $n_c$ pulses;

$|V_{cMax}|$ is the maximum value expressed as an absolute value in Volts, of the cathodic voltage among the $n_c$ pulses;

$|V_{aMax}|$ is the maximum value expressed as an absolute value in Volts, of the anodic voltage among the $n_a$ pulses;

$$K_1 = 10^4 \, A^{-1}.cm^2.s^{-1} \; ;$$

$$K_2 = 10^2 \, A^{-1}.cm^2.s^{-1} \; ;$$

$$K_3 = 0.1 \, V^{-1}.s^{-1} \; ;$$

and in which the electrical excitation is applied for a total time $t_{tot}$ according to the following formula:

$$t_{tot} = \sum_{j=1 \text{ à } n} (t_{aj} + t_{ij})$$

where n is the total number of pulses forming the electrical excitation with $n=n_c+n_a$ and $t_{aj}$ is the activation time $t_a$ during which the $j^{th}$ pulse is active, $t_{ij}$ is the time $t_i$ during which the $j^{th}$ pulse is inactive and the $t_{aj}/t_{ij}$ ratio is greater than $10^{-4}$.

2. Method according to claim 1, in which said electrical pulse(s) has(have) a maximum amplitude in a minimum activation time $t_a$.

3. Method according to claim 1 or 2, in which the ratio $t_a/t_i$ is greater than or equal to 1 for each pulse.

4. Method according to any one of claims 1 to 3, in which there are between 10 and 50 pulses.

5. Method according to any one of claims 1 to 4, in which the pulses are periodic.

6. Method according to any one of claims 1 to 5, in which the maximum amplitude of the cathodic current pulses is between 400 $\mu A/cm^2$ and 5 $mA/cm^2$.

7. Method according to any one of claims 1 to 5, in which the maximum amplitude of the cathodic voltage pulses is between 2 V and 5 V.

8. Method according to any one of claims 1 to 7, in which the electrolyte does not contain any electroactive species.

9. Method according to any one of claims 1 to 8, in which the activation time $t_a$ of a pulse is about 100 milliseconds.

10. Method according to any one of claims 1 to 9, in which, when the electrical excitation is in the form of several electrical pulses, at least one of the pulses is an anodic pulse and at least one of the pulses is a cathodic pulse.

11. Method according to claim 10, in which the anodic pulse(s) are alternated with the cathodic pulse(s).

12. Method according to claim 1, in which the electrolyte containing electroactive species is chosen from among an electroactive ionic salt, urine, blood, wine, a cola flavoured drink or sea water.

13. Method according to claim 1, in which the electrolyte that does not contain any electroactive species is chosen from among $LiClO_4$, $NaClO_4$, $KClO_4$ or a mix of them, $Li_2SO_4$, du $Na_2SO_4$, $K_2SO_4$ or a mix of them.

14. Use of a method according to any one of claims 1 to 13 to restore the electrochemical reactivity of a doped diamond-based electrode.

15. Use according to claim 14, in which the aqueous solution containing an electrolyte used to restore the electrochemical reactivity of said electrode is the same aqueous solution in which the electrode lost its electrochemical reactivity.

FIG. 1

FIG. 2

FIG. 3

FIG. 4

FIG. 5

FIG. 6

FIG. 7

FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008148861 A

**Littérature non-brevet citée dans la description**

- **I. YAGI et al.** *Journal of Electroanalytical Chemistry,* 1999, vol. 473, 173-178
- **G. SALAZAR-BANDA et al.** On the changing electrochemical behaviour of boron-doped diamond surfaces with time after cathodic pre-treatments. *Electrochimica Acta,* 2006, vol. 51, 4612-4619
- **A. KRAFT.** Doped Diamond: A Compact Review on a New, Versatile Electrode Material. *Int. J. Electrochem. Sci.,* 2007, vol. 2, 355-385
- **J. DE SANOIT et al.** Electrochemical diamond sensors for TNT detection in water. *Electrochimica Acta,* 2009, vol. 54, 5688-5693
- **E. MAHÉ et al.** Electrochemical reactivity at graphitic micro-domains on polycrystalline boron doped diamond thin-films electrodes. *Electrochemica Acta,* 2005, vol. 50, 2263-2277